# EUROPEAN PATENT APPLICATION

(11) **EP 4 043 209 A1**
(43) Date of publication of application: **17.08.2022**
(21) Application number: 20874239.5
(22) Date of filing: 24.09.2020
(51) Int. Cl.: B32B 27/00, B32B 27/30, C09J 133/00, C09J 183/04, C08J 5/18, C09J 7/22, C09J 7/38

(54) **FLUORINE RESIN SHEET AND ADHESIVE TAPE**

(30) Priority: 09.10.2019 JP 2019186241
(71) Applicant: NITTO DENKO CORPORATION, Ibaraki-shi Osaka 567-8680 (JP)
(72) Inventor: TAKAMURA Yuichi, Ibaraki-shi, Osaka 567-8680 (JP); AKIBA Kurato, Ibaraki-shi, Osaka 567-8680 (JP)
(74) Representative: Müller-Boré & Partner Patentanwälte PartG mbB
(86) International application number: PCT/JP2020/036132
(87) International publication number: WO 2021/070628

(57) **Abstract**

A fluororesin sheet of the present invention is a sheet mainly including a fluororesin, having a blackness of 30 or less as expressed in terms of L^{*} value in an L^{*}a^{*}b^{*} color system, and having a surface resistivity of 1 × 10¹⁰ Ω/sq or more. The fluororesin sheet of the present invention may be a sheet mainly including a fluororesin and including a composite oxide black filler. An adhesive tape of the present invention includes a substrate sheet and an adhesive layer provided on one of surfaces of the substrate sheet, and the substrate sheet is one of the above fluororesin sheets. The fluororesin sheet and the adhesive tape of the present invention unprecedentedly have a high degree of freedom in application development.

## Description

### TECHNICAL FIELD

The present invention relates to a fluororesin sheet and an adhesive tape.

### BACKGROUND ART

Fluororesins such as polytetrafluoroethylene (hereinafter referred to as "PTFE") have various excellent physical, chemical, and electrical properties such as high heat resistance, cold resistance, chemical resistance, flame resistance, electrical insulation, and weather resistance, and low friction coefficient and permittivity. Sheets mainly including fluororesins (hereinafter referred to as "fluororesin sheets") and adhesive tapes including a fluororesin sheet as a substrate sheet (hereinafter referred to as "fluororesin adhesive tapes") are expected to have the above-mentioned excellent properties derived from the fluororesins.

The color of fluororesins is usually white. However, colored fluororesins are required depending on the application. Conventionally, carbon fillers such as carbon black have been used for coloring fluororesins. Patent Literature 1 discloses an adhesive tape including: a PTFE film including a carbon filler; and a silicone adhesive layer provided on one of surfaces of the film. Patent Literature 2 discloses a fluororesin composition for radomes including a fluororesin and a carbon filler.

The adhesive tape of Patent Literature 1 is disposed for use between a windshield and a cowl top of an automobile. To achieve an excellent appearance and outward visibility by an occupant, the adhesive tape of Patent Literature 1 is black in color. For blackening, in the adhesive tape of Patent Literature 1, the PTFE film includes the carbon filler at a content of 0.8 weight% to 10 weight%.

The resin composition of Patent Literature 2 is a resin composition for radomes (antenna covers). To obtain a radome in gray regarded as a desirable color and to prevent degradation of antenna characteristics caused by a conductive carbon filler, the resin composition of Patent Literature 2 includes a small amount of the carbon filler of 0.2 parts by weight or less per 100 parts by weight of the fluororesin.

### CITATION LIST

### Patent Literature

Patent Literature 1: JP 2014-173037 A
Patent Literature 2: JP 2008-67069 A

### SUMMARY OF INVENTION

### Technical Problem

Black-colored (blackened) fluororesin sheets and fluororesin adhesive tapes are expected to achieve development of additional applications which have been difficult with sheets and adhesive tapes in white that is the color of fluororesin materials. However, fluororesin sheets and fluororesin adhesive tapes blackened with a carbon filler, like the adhesive tape of Patent Literature 1, have degraded electrical properties compared with uncolored sheets and adhesive tapes including no carbon filler. Degradation in electrical properties may after all limit the development of applications which are expected owing to blackening. On the other hand, reduction in addition amount of a carbon filler, like in the resin composition of Patent Literature 2, leads to a possibility of suppressing degradation in electrical properties of fluororesin sheets and fluororesin adhesive tapes. However, coloring in gray is the limit for this case. According to the study by the present inventors, a trade-off relationship is established between the degree of blackening and the electrical properties in fluororesin sheets and fluororesin adhesive tapes, and this relationship practically limits the application development of the fluororesin sheets and the fluororesin adhesive tapes.

The present invention aims to provide novel fluororesin sheet and fluororesin adhesive tape that are unprecedentedly high in degree of freedom in application development.

### Solution to Problem

The present invention provides a fluororesin sheet mainly including a fluororesin, having a blackness of 30 or less as expressed in terms of L^{*} value in an L^{*}a^{*}b^{*} color system, and having a surface resistivity of 1 × 10¹⁰ Ω/sq or more. (The sheet is hereinafter referred to as "first fluororesin sheet".)

In another aspect, the present invention provides a fluororesin sheet mainly including a fluororesin and including a composite oxide black filler. (The sheet is hereinafter referred to as "second fluororesin sheet".)

In still another aspect, the present invention provides an adhesive tape including: a substrate sheet; and an adhesive layer provided on one of surfaces of the substrate sheet, wherein the substrate sheet is the first fluororesin sheet or the second fluororesin sheet.

### Advantageous Effects of Invention

In the first fluororesin sheet, a blackness of 30 or less as expressed in terms of L^{*} value in the L^{*}a^{*}b^{*} color system is achieved. According to the study by the present inventors, this blackness corresponds to a blackness equal to or higher than that determined as "sufficiently colored" in at least Patent Literature 1. Also, in the first fluororesin sheet, high electrical properties, in terms of surface resistivity of 1 × 10¹⁰ Ω/sq or more, are achieved. According to the study by the present inventors, the surface resistivity exhibited by the first fluororesin sheet is higher than the surface resistivity exhibited by the adhesive tape of Patent Literature 1 by six orders of magnitude or more. The first fluororesin sheet is a novel fluororesin sheet having a high degree of freedom in application development, in which both the blackening and the electrical properties are achieved at extremely high levels.

The second fluororesin sheet includes a composite oxide black filler. By including the composite oxide black filler, the second fluororesin sheet can achieve, for example, a blackness of 30 or less as expressed in terms of L^{*} value in the L^{*}a^{*}b^{*} color system and/or a surface resistivity of 1 × 10¹⁰ Ω/sq or more. The second fluororesin sheet can be provided as a novel fluororesin sheet having a high degree of freedom in application development, in which both the blackening and the electrical properties are achieved at extremely high levels.

The adhesive tape of the present invention includes, as its substrate sheet, the first fluororesin sheet or the second fluororesin sheet. This substrate sheet can achieve both the blackening and the electrical properties at extremely high levels. Therefore, the adhesive tape of the present invention can be provided as a novel fluororesin adhesive tape having a high degree of freedom in application development, in which both the blackening and the electrical properties are achieved at extremely high levels.

### BRIEF DESCRIPTION OF DRAWINGS

FIG. 1 is a cross-sectional view schematically showing an example of a fluororesin sheet of the present invention.
FIG. 2 is a cross-sectional view schematically showing another example of the fluororesin sheet of the present invention.
FIG. 3 is a cross-sectional view schematically showing still another example of the fluororesin sheet of the present invention.
FIG. 4 is a cross-sectional view schematically showing an example of an adhesive tape of the present invention.

### DESCRIPTION OF EMBODIMENTS

Embodiments of the present invention will be described with reference to the drawings. The present invention is not limited to the following embodiments.

### [First Fluororesin Sheet]

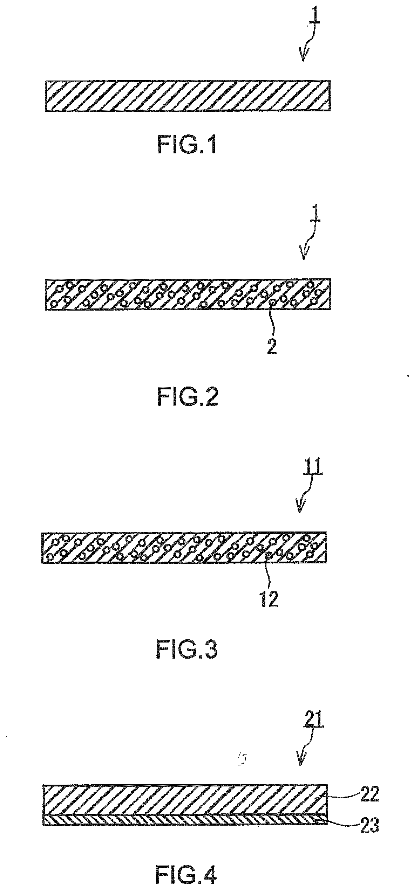

FIG. 1 shows an example of the first fluororesin sheet. A fluororesin sheet 1 in FIG. 1 mainly includes a fluororesin. The fluororesin sheet 1 has a blackness of 30 or less as expressed in terms of L^{*} value in the L^{*}a^{*}b^{*} color system. Also, the fluororesin sheet 1 has a surface resistivity of 1 × 10¹⁰ Ω/sq or more. Note that the L^{*}a^{*}b^{*} color system is a color system specified by the International Commission on Illumination (CIE) in 1976, and is referred to also as "CIELAB". In the L^{*}a^{*}b^{*} color system, the blackness increases as the value of L^{*} corresponding to the lightness decreases.

The blackness of the fluororesin sheet 1 may be 27 or less, 25 or less, 23 or less, or even 22 or less, as expressed in terms of L^{*} value in the L^{*}a^{*}b^{*} color system. The lower limit for the blackness is for example 0 or more.

The surface resistivity of the fluororesin sheet 1 may be 1 × 10¹¹ Ω/sq or more, 1 × 10¹² Ω/sq or more, 1 × 10¹³ Ω/sq or more, or even 1 × 10¹⁴ Ω/sq or more. The upper limit for the surface resistivity is not limited, and is for example 1 × 10¹⁸ Ω/sq or less.

FIG. 2 shows another example of the first fluororesin sheet. The fluororesin sheet 1 shown in FIG. 2 includes a composite oxide black filler 2. According to the fluororesin sheet 1 in FIG. 2, achievement of both the blackness and the surface resistivity can become more reliable by including the black filler 2.

The composite oxide black filler 2 includes a composite oxide that is a solid solution of two or more types of metal oxides. The composite oxide constituting the black filler 2 is preferably a composite oxide of copper, chromium, and manganese. In this case, achievement of both the blackness and the surface resistivity of the fluororesin sheet 1 at extremely high levels can become more reliable. In addition, although having been sufficiently blackened, the fluororesin sheet 1 can more reliably achieve electrical properties other than the surface resistivity, namely, properties such as relative permittivity, dielectric loss tangent, and breakdown voltage. An example of the black filler 2 including a composite oxide of copper, chromium, and manganese is Color Index International (C.I.) Pigment Black 28.

The average particle diameter of the black filler 2 is for example 0.05 to 1 µm, and may be 0.1 to 0.8 µm or 0.15 to 0.6 µm. The average particle diameter of the black filler 2 included in the fluororesin sheet 1 can be evaluated by performing image analysis with a scanning electron microscope (hereinafter referred to as "SEM") on an image of a cross section of the fluororesin sheet 1. In the image analysis, the particle size is evaluated on at least 200 black filler particles included in the image, and its average value can be determined as the average particle diameter of the black filler 2. The black filler 2 having an average particle diameter in the above range exhibits particularly favorable dispersibility in formation of the fluororesin sheet 1, so that achievement of both the blackness and the surface resistivity at extremely high levels can become more reliable.

The aspect ratio expressed by the ratio b/a of the major axis b to the minor axis a of the black filler 2 is for example 1 to 10, and may be 1 to 6 or 1 to 3. The aspect ratio of the black filler 2 included in the fluororesin sheet 1 can be evaluated by performing SEM image analysis on an image of a cross section of the fluororesin sheet 1. In the image analysis, the aspect ratio was evaluated on at least 200 black filler particles included in the image, and its average value can be determined as the aspect ratio of the black filler 2. The black filler 2 having an aspect ratio in the above range exhibits particularly favorable dispersibility in formation of the fluororesin sheet 1, so that achievement of the blackness and the surface resistivity at extremely high levels can become more reliable.

The content of the black filler 2 in the fluororesin sheet 1 is for example 1 part by weight or more and 20 parts by weight or less per 100 parts by weight of the fluororesin. The lower limit for the content of the black filler 2 may be 1.5 parts by weight or more, 2 parts by weight or more, 2.5 parts by weight or more, or even 3 parts by weight or more, per 100 parts by weight of the fluororesin. The upper limit for the content of the black filler 2 may be 15 parts by weight or less, 12.5 parts by weight or less, 10 parts by weight or less, 7.5 parts by weight or less, or even 5 parts by weight or less, per 100 parts by weight of the fluororesin. The fluororesin sheet 1 having the content of the black filler 2 in these ranges more reliably achieves both the blackness and the surface resistivity at extremely high levels can become more reliable.

The fluororesin mainly constituting the fluororesin sheet 1 is for example at least one selected from polytetrafluoroethylene (PTFE), polyvinylidene fluoride (PVDF), perfluoroalkoxy alkane (PFA), polytetrafluoroethylene-polyhexafluoropropylene copolymer (FEP), and ethylene-polytetrafluoroethylene copolymer (ETFE). The fluororesin is preferably PTFE, in which case a particularly high surface resistivity can be achieved. The phrases "a fluororesin sheet mainly including a fluororesin" and "a fluororesin mainly constituting a fluororesin sheet" as used herein mean that the substrate of the fluororesin sheet 1 is a fluororesin, and more specifically mean that the content of the fluororesin in the fluororesin sheet 1 is for example 50 weight% or more, preferably 60 weight% or more, and more preferably 70 weight% or more.

The thickness of the fluororesin sheet 1 is for example 1000 µm or less, and may be 800 µm or less or even 500 µm or less. The lower limit for the thickness of the fluororesin sheet 1 is for example 10 µm or more. Even in the case where the fluororesin sheet 1 is thin and thus has difficulty in blackening, the fluororesin sheet 1 can achieve both the blackness and the surface resistivity at extremely high levels.

The shape of the fluororesin sheet 1 is for example a polygon such as a square or a rectangle, or a band. However, the shape of the fluororesin sheet 1 is not limited to these examples. The fluororesin sheet 1 in a polygonal shape can be distributed in sheet form, and the band-shaped fluororesin sheet 1 can be distributed as a wound body obtained by being wound around a core. The width of the band-shaped fluororesin sheet 1 and the width of the wound body obtained by winding the band-shaped fluororesin sheet 1 can be freely set.

The fluororesin sheet 1 can have, depending on its configuration, high performance also in electrical properties other than the surface resistivity. Examples of the other electrical properties include relative permittivity, dielectric loss tangent, and breakdown voltage.

The relative permittivity of the fluororesin sheet 1 at a frequency of 10 GHz is for example less than 4.0, and may be 3.5 or less, 3.0 or less, 2.5 or less, or even 2.0 or less. The lower limit for the relative permittivity of the fluororesin sheet 1 at a frequency of 10 GHz is for example 1.5.

The dielectric loss tangent of the fluororesin sheet 1 at a frequency of 10 GHz is for example 0.3 or less, and may be 0.2 or less, 0.1 or less, 0.05 or less, 0.01 or less, 0.005 or less, or even 0.002 or less. The lower limit for the dielectric loss tangent of the fluororesin sheet 1 at a frequency of 10 GHz is for example 0.0001. The fluororesin sheet 1 can have such low relative permittivity and/or dielectric loss tangent at a frequency of 10 GHz in addition to a surface resistivity of 1 × 10¹⁰ Ω/sq or more, and this fact means that the fluororesin sheet 1 is applicable to high-frequency circuits in electronic devices such as mobile devices.

The breakdown voltage of the fluororesin sheet 1 (value when the thickness is 100 µm) is for example 3.0 kV or more, and may be 3.2 kV or more, 4.0 kV or more, 5.0 kV or more, or even 5.5 kV or more. The fluororesin sheet 1 can have such a large breakdown voltage in addition to the surface resistivity of 1 × 10¹⁰ Ω/sq or more, and this fact means that the fluororesin sheet 1 is for example applicable to applications of heat-resistant insulation for coils of motors and transformers.

The fluororesin sheet 1 can have high chemical properties derived from the fluororesin. Examples of the chemical properties include heat resistance, moisture resistance, solvent resistance, chemical resistance, flame resistance, and weather resistance.

The fluororesin sheet 1 may include a material in addition to the fluororesin and the black filler 2. The material that the fluororesin sheet 1 may include is for example an additive such as: an antistatic agent; or a filler including glass fibers, molybdenum disulfide, polyimides, and aromatic polyesters. In the case where the fluororesin sheet 1 includes the additive, the content of the additive in the fluororesin sheet 1 is for example 60 parts by weight or less per 100 parts by weight of the fluororesin, and may be 30 parts by weight or less or 25 parts by weight or less per 100 parts by weight of the fluororesin.

The fluororesin sheet 1 can be used, for example, in electronic devices such as mobile devices including smart phones, smart watches, tablets, and wearable computers. More specifically, the fluororesin sheet 1 may be used as a circuit board of electronic devices. Further, based on the high electrical properties of the fluororesin sheet 1, it is possible to consider application to electric circuits such as high-frequency circuits and high-voltage circuits, which are required to satisfy severe electrical requirements.

The fluororesin sheet 1 may be used as a substrate sheet for an adhesive tape. The use of the fluororesin sheet 1 as the substrate sheet achieves a fluororesin adhesive tape having a high degree of freedom in application development, in which both the blackening and the electrical properties are achieved at extremely high levels. The application of this adhesive tape is similar to the application of the sheet 1.

The fluororesin sheet 1 and an adhesive tape including the fluororesin sheet 1 as its substrate sheet may be used for an application which does not require the above-mentioned high blackness and/or surface resistivity. Examples of this application include a crack prevention sheet (crack prevention adhesive tape) to be disposed between a windshield and a cowl top of a vehicle such as an automobile, an unusual noise suppression sheet (unusual noise suppression adhesive tape) for suppressing chattering noise generated by vibration of a windshield, and a binding tape for binding a fuel hose of a vehicle.

The fluororesin sheet 1 can be produced, for example, based on a method for producing fluororesin cut sheets (skive sheets). However, the method for producing the fluororesin sheet 1 is not limited to this. The following describes an example of a more specific method for producing the fluororesin sheet 1 for the case where the fluororesin is PTFE.

First, PTFE powder (molding powder) and the black filler 2 are sufficiently mixed. A common powder mixer can be used for the mixing. Next, the obtained mixture is introduced into a mold, a predetermined pressure is applied to the mixture in the mold for a predetermined time for preforming. The preforming can be performed at ordinary temperature. The shape of the internal space of the mold for containing the mixture is preferably a column in order to enable cutting with a cutting lathe, which is described later. In this case, a columnar PTFE block can be obtained. Next, the resulting preform is taken out from the mold and fired at a temperature equal to or higher than the PTFE melting point (327°C) for a predetermined time to obtain a PTFE block. Next, the obtained PTFE block is cut to have a predetermined thickness, and the fluororesin sheet 1 that is a cut sheet (skive sheet) can be thus obtained. In the case where the PTFE block is columnar, it is possible to use a cutting lathe for continuously cutting the surface of the block while rotating the block, so that the fluororesin sheet 1 can be efficiently produced. Further, with the cutting lathe, it is relatively easy to control the thickness of the fluororesin sheet 1 to be produced, and it is also possible to produce a band-shaped fluororesin sheet 1.

### [Second Fluororesin Sheet]

FIG. 3 shows an example of the second fluororesin sheet. A fluororesin sheet 11 in FIG. 3 includes a composite oxide black filler 12.

The black filler 12 is usually the same as the black filler 2 that can be included in the first fluororesin sheet 1, including in terms of preferred embodiment.

The content of the black filler 12 in the fluororesin sheet 11 can be the same as the content of the black filler 2 in the first fluororesin sheet 1, including in terms of preferred range.

The fluororesin mainly constituting the fluororesin sheet 11 can be the same as the fluororesin mainly constituting the first fluororesin sheet 1, including in terms of preferred embodiment.

The thickness and the shape of the fluororesin sheet 11 can be the same as the thickness and the shape of the first fluororesin sheet 1, including in terms of preferred range and embodiment.

The fluororesin sheet 11 can have a high blackness. The blackness of the fluororesin sheet 11 as expressed in terms of L^{*} value in the L^{*}a^{*}b^{*} color system is for example 30 or less, and may be 27 or less, 25 or less, 23 or less, or even 22 or less. The lower limit for the blackness is for example 0 or more.

The fluororesin sheet 11 can have a high surface resistivity. The surface resistivity of the fluororesin sheet 11 is for example 1 × 10¹⁰ Ω/sq or more, and may be 1 × 10¹¹ Ω/sq or more, 1 × 10¹² Ω/sq or more, 1 × 10¹³ Ω/sq or more, or even 1 × 10¹⁴ Ω/sq or more. The upper limit for the surface resistivity is not limited, and is for example 1 × 10¹⁸ Ω/sq or less.

The fluororesin sheet 11 can simultaneously have the high blackness and surface resistivity mentioned above.

The fluororesin sheet 11 can have, depending on its configuration, high performance also in electrical properties other than the surface resistivity. Examples of the other electrical properties include relative permittivity, dielectric loss tangent, and breakdown voltage. The numerical ranges of these electrical properties of the fluororesin sheet 11 can be the same as the numerical ranges of the properties of the first fluororesin sheet 1, including in terms of preferred range.

The fluororesin sheet 11 can have high chemical properties derived from the fluororesin. Examples of the chemical properties include heat resistance, moisture resistance, solvent resistance, chemical resistance, flame resistance, and weather resistance.

The fluororesin sheet 11 may include a material in addition to the fluororesin and the black filler 12. The material that the fluororesin sheet 11 may include is for example the additive described above in the description of the first fluororesin sheet 1. In the case where the fluororesin sheet 11 includes the additive, the content of the additive in the fluororesin sheet 11 is for example 60 parts by weight or less per 100 parts by weight of the fluororesin, and may be 30 parts by weight or less or 25 parts by weight or less per 100 parts by weight of the fluororesin.

The use and manufacturing method of the fluororesin sheet 11 can be the same as the use and manufacturing method of the first fluororesin sheet 1.

### [Adhesive Tape]

FIG. 4 shows an example of the adhesive tape of the present invention. An adhesive tape 21 in FIG. 4 includes a substrate sheet 22 and an adhesive layer 23 provided on one of surfaces of the substrate sheet 22. The substrate sheet 22 is the first fluororesin sheet 1 or the second fluororesin sheet 11.

The adhesive tape 21 can have a high blackness based on the high blackness that the substrate sheet 22 can have. The blackness of the adhesive tape 21 as expressed in terms of L^{*} value in the L^{*}a^{*}b^{*} color system is for example 30 or less, and may be 27 or less, 25 or less, 23 or less, or even 22 or less. The lower limit for the blackness is for example 0 or more.

The adhesive tape 21 can have a high surface resistivity based on the high surface resistivity that the substrate sheet 22 can have. The surface resistivity of the adhesive tape 21 is for example 1 × 10¹⁰ Ω/sq or more, and may be 1 × 10¹¹ Ω/sq or more, 1 × 10¹² Ω/sq or more, 1 × 10¹³ Ω/sq or more, or even 1 × 10¹⁴ Ω/sq or more. The upper limit for the surface resistivity is not limited, and is for example 1 × 10¹⁸ Ω/sq or less.

The adhesive tape 21 can simultaneously have the high blackness and surface resistivity mentioned above.

The adhesive tape 21 can have, depending on its configuration, high performance also in electrical properties other than the surface resistivity. Examples of the other electrical properties include relative permittivity, dielectric loss tangent, and breakdown voltage. The numerical ranges of these electrical properties of the adhesive tape 21 can be the same as the numerical ranges of the properties of the substrate sheet 22, including in terms of preferred range.

The adhesive tape 21 can have high chemical properties derived from the fluororesin of the substrate sheet 22. Examples of the chemical properties include heat resistance, moisture resistance, solvent resistance, chemical resistance, flame resistance, and weather resistance.

The thickness of the substrate sheet 22 is for example 10 to 1000 µm, and may be 10 to 800 µm or 10 to 500 µm. The adhesive tape 21 even including the substrate sheet 22 which is thin can achieve both the blackness and the surface resistivity at extremely high levels.

The shape of the adhesive tape 21 is for example a polygon such as a square or a rectangle, or a band. However, the shape of the adhesive tape 21 is not limited to these examples. The polygonal adhesive tape 21 can be distributed in sheet form, and the band-shaped adhesive tape 21 can be distributed as a wound body obtained by being wound around a core. The width of the band-shaped adhesive tape 21 and the width of the wound body obtained by winding the band-shaped adhesive tape 21 can be freely set.

The adhesive constituting the adhesive layer 23 is for example an acrylic adhesive, a silicone adhesive, a urethane adhesive, or a rubber adhesive. However, the adhesive constituting the adhesive layer 23 is not limited to these examples. From the viewpoint of excellent heat resistance and chemical resistance, the adhesive constituting the adhesive layer 23 is preferably a silicone adhesive.

The adhesive constituting the adhesive layer 23 may be a known adhesive. The acrylic adhesive is for example an adhesive disclosed in JP 2005-105212 A. The silicone adhesive is for example an adhesive disclosed in JP 2003-313516 A (including those disclosed as comparative examples).

The adhesive tape 21 may include a material and/or a layer in addition to the substrate sheet 22 and the adhesive layer 23. The layer that the adhesive tape 21 may further include is for example a release layer (separator) disposed on the adhesive layer 23 to cover the adhesive layer 23. The separator is usually released when the adhesive tape 21 is used. The separator may be the same as a separator included in known adhesive tapes. A facing surface of the separator facing the adhesive layer 23 may be subjected to a release treatment. The separator is for example a resin sheet formed of a polyester resin such as polyethylene terephthalate (PET), or a polyolefin resin such as polyethylene or polypropylene.

The application of the adhesive tape 21 is not limited, and can be the same as the application of the first fluororesin sheet 1.

The method for producing the adhesive tape 21 is not limited. The adhesive tape 21 can be produced by forming the adhesive layer 23 on the one surface of the substrate sheet 22. The adhesive layer 23 can be formed, for example, by applying an adhesive composition onto the surface of the substrate sheet 22 and drying and/or curing the applied adhesive composition. Known methods are applicable to the application, drying, and curing of the adhesive composition.

### [EXAMPLES]

Hereinafter, the present invention will be described more specifically by way of examples. The present invention is not limited to the following examples.

First, a method for evaluating each of fluororesin sheets and adhesive sheets prepared in the examples will be described.

### [Blackness (L^{*} Value)]

The blackness (L^{*} value in the L^{*}a^{*}b^{*} color system) of the fluororesin sheet and the adhesive tape was evaluated with a chroma meter (CR-400 manufactured by KONICA MINOLTA, INC.). The blackness of the adhesive tape was evaluated on a surface of the adhesive tape, the surface being positioned on the substrate sheet side.

### [Surface Resistivity]

The surface resistivity of the fluororesin sheet and the adhesive tape was measured according to JIS L6911: 2006 with a high resistivity meter (Hiresta-UP MCP-HT450 manufactured by Mitsubishi Chemical Analytech, Co., Ltd.), which is a measuring device according to JIS K6911: 2006. In measuring the surface resistivity of the adhesive tape, a surface electrode and a rear electrode of the measuring device were respectively placed on the substrate sheet side and the adhesive layer side of the adhesive tape. The voltage to be applied in the measurement was set to 100 V, the temperature and the relative humidity of the measurement environment were respectively set to 20°C and 65%. Note that the measurement limit of the measuring device is 1 × 10¹⁴ Ω/sq.

### [Relative Permittivity and Dielectric Loss Tangent]

The relative permittivity and the dielectric loss tangent of the fluororesin sheet at a frequency of 10 GHz were evaluated by the cavity resonator perturbation method. According to the cavity resonator perturbation method, the complex permittivity of a test piece can be measured, and the real part (εᵣ) of the obtained complex permittivity can be determined as the relative permittivity, and the ratio (εₗ/εᵣ) of the imaginary part to the real part can be determined as the dielectric loss tangent. In the measurement of the complex permittivity, a resonance characteristics measuring device was used, which was a combination of a cavity resonator for 10 GHz (perturbation method cavity resonator permittivity measuring device CP531 manufactured by KANTO Electronic Application and Development Inc.) and a network analyzer (N5230C PNA-L microwave network analyzer manufactured by Agilent Technologies Inc.). The test piece was set to a strip shape having a width of 2 mm and a length of 70 mm. Also, the test piece was cut out such that the MD direction (cutting direction by the cutting lathe) of the fluororesin sheet coincided with the longitudinal direction of the test piece. The temperature and the relative humidity of the measurement environment were respectively set to 20°C and 65%.

### [Breakdown Voltage (BDV)]

The BDV of the fluororesin sheet and the adhesive tape (converted per 100 µm thick) was evaluated as follows with a dielectric strength tester (dielectric strength tester TS-EB0270 manufactured by Tokyo Seiden Co., Ltd.). First, a test piece having a width of 25 mm and a length of 150 mm was cut out from the sheet or tape to be evaluated. Next, electrodes (spherical shape having a diameter of 12.5 mm) were placed on both surfaces of the test piece, and a load of 500 g was applied between the placed pair of electrodes thus to reliably bring the surfaces of the test piece into contact with the respective electrodes. The electrodes were placed on a central portion of the test piece such that the electrodes coincided in position with each other when viewed from a direction perpendicular to the surface of the test piece. Next, the electrodes were connected to the dielectric strength tester to apply a voltage between the electrodes at a voltage rise rate of 1 kV/sec, and the applied voltage when the test piece was subjected to dielectric breakdown was recorded. It is known that the BDV is proportional to the thickness of the test piece for the same insulation material. The recorded applied voltage was converted into a conversion value per 100 µm thick of the test piece, and the conversion value was determined as the BDV (converted per 100 µm thick) of the test piece. The test was performed in air where the temperature and the relative humidity of the test environment were respectively set to 20°C and 65%. The frequency of the applied voltage was set to 50 Hz which was equivalent to the power supply frequency of the tester.

### [Adhesive Force]

The adhesive force (unit: N/25 mm) of the adhesive tape was measured as follows according to the method for measuring the 180° peel adhesive force specified in JIS Z0237: 2009. The shape of the test piece was set to a strip having a width of 25 mm and a length of 250 mm. In an atmosphere at a temperature of 23°C and a relative humidity of 50%, a stainless steel plate (SUS304) as an adherend and the test piece were pressure-bonded to each other. In the pressure-bonding, a roller having a mass of 2 kg was reciprocated once. After the pressure-bonding, the test piece was left for at least 30 minutes, and then a 180° peel test was performed in which the test piece was peeled off from the stainless steel plate to measure the adhesive force of the adhesive tape. The peel rate (tensile speed) was set to 300 mm/min.

### [Unwinding Force]

The unwinding force (unit: N/25 mm) of the adhesive tape was measured according to the method for measuring the low-speed unwinding force specified in JIS Z0237: 2009. The tape width to be evaluated was set to 25 mm. Specifically, in an atmosphere at a temperature of 23°C and a relative humidity of 50%, a roll of the adhesive tape was fixed with a jig to one of chucks of an unwinding force measuring device (Autograph AG-Xplus series, manufactured by Shimadzu Corporation), and the end of the adhesive tape taken out from the roll was chucked with the other chuck. From this state, the unwinding force of the adhesive tape was measured at an unwinding speed of 300 mm/min.

### (Example 1)

Uniformly mixed with a Henschel mixer were 100 parts by weight of PTFE powder (Teflon (registered trademark) PTFE molding powder 7A-J manufactured by Du Pont-Mitsui Fluorochemicals Company, Ltd., average particle diameter of 35 µm) and 1 part by weight of a composite oxide black filler (Daipyroxde Black #9568 manufactured by Dainichiseika Color & Chemicals Mfg. Co., Ltd.). The black filler used was a filler including a composite oxide of copper, chromium, and manganese and falling under C.I. Pigment Black 28.

Next, the obtained mixture was introduced into a cylindrical mold, and the mixture in the mold was preformed under conditions of a temperature of 23°C, a pressure of 60 MPa, and a pressure application time of 1 hour. Next, the resulting preform was taken out from the mold, and fired at 375°C for 3 hours thus to obtain a columnar PTFE block having a height of 100 mm and an outer diameter of 50 mm. Next, the obtained PTFE block was cut with a cutting lathe thus to obtain a 100 µm thick PTFE sheet including a composite oxide black filler. Also, SEM image analysis was performed on an image of a cross section of the obtained PTFE sheet (magnification of 10000) thus to obtain an average particle diameter of 0.45 µm and an aspect ratio of 1.3 of the black filler. In the image analysis, the particle diameter and the aspect ratio were evaluated on at least 200 black filler particles included in the image, and their respective average values were determined as the average particle diameter and the aspect ratio of the black filler. The properties of the obtained PTFE sheet are shown in Table 1 below.

### (Examples 2 to 6)

A 100 µm thick PTFE sheet including a composite oxide black filler was obtained in a similar manner to that of Example 1, except that the amount of the black filler to be mixed with the PTFE powder was set as shown in Table 1 below. The properties of the obtained PTFE sheets are shown in Table 1 below.

### (Reference Example)

A 100 µm thick PTFE sheet including no black filler was obtained in a similar manner to that of Example 1, except that no black filler was mixed. The properties of the obtained PTFE sheet are shown in Table 1 below.

### (Comparative Example 1)

A 100 µm thick PTFE sheet including carbon black was obtained in a similar manner to that of Example 1, except that carbon black (VULCAN (registered trademark) XC72R manufactured by Cabot Corporation) was mixed with PTFE powder instead of a composite oxide black filler. The properties of the obtained PTFE sheet are shown in Table 1 below.

### (Comparative Example 2)

A 100 µm thick PTFE sheet including carbon black was obtained in a similar manner to that of Comparative Example 1, except that the amount of carbon black to be mixed with the PTFE powder was set to 3 parts by weight per 100 parts by weight of PTFE. The properties of the obtained PTFE sheet are shown in Table 1 below.

**[Table 1]**

| | Reference Example | Example | | | | | | Comparative Example | |
|---|---|---|---|---|---|---|---|---|---|
| | | 1 | 2 | 3 4 | | 5 | 6 | 1 | 2 |
| PTFE addition amount (part by weight) | 100 | 100 | 100 | 100 | 100 | 100 | 100 | 100 | 100 |
| Filler type | None | Composite oxide black filler | | | | | | Carbon black | |
| Filler addition amount (part by weight) | - | 1 | 3 | 5 | 10 | 15 | 20 | 1 | 3 |
| Blackness (L^{*} value) | 95 | 27 | 22 | 21 | 22 | 22 | 21 | 40 | 20 |
| Relative permittivity (@10GHz) | 1.9 | 1.9 | 1.9 | 2.0 | 2.2 | 2.2 | 2.3 | 4.0 | 4.5 |
| Dielectric loss tangent (@10GHz) | 0.0001 | 0.0004 | 0.0012 | 0.0021 | 0.0046 | 0.0071 | 0.0091 | 0.3222 | 0.6592 |
| Surface resistivity (Ω/sq) | Over 1×10¹⁴ | Over 1×10¹⁴ | Over 1×10¹⁴ | Over 1×10¹⁴ | Over 1×10¹⁴ | Over 1×10¹⁴ | Over 1×10¹⁴ | 2×10⁴ | 2×10⁴ |
| BDV (kV/100µm) | 9.7 | 8.0 | 5.7 | 5.7 | 4.2 | 3.8 | 3.2 | 3.2 | 3.0 |

As shown in Table 1, the sheets of Examples 1 to 6 achieved a blackening of 27 or less as expressed in terms of L^{*} value, and achieved higher electrical properties, more specifically, lower relative permittivity and dielectric loss tangent, and higher BDV and surface resistivity than the sheets of the comparative examples. In particular, the surface resistivity of the sheets of the examples exceeded the measurement limit of 1 × 10¹⁴ Ω/sq of the measuring device, and was larger than that of the sheets of the comparative examples by 10 orders of magnitude or more. In addition, while achieving a blackening of 27 or less as expressed in terms of L^{*} value depending on the amount of the black filler added, the sheets of the examples achieved the electrical properties that compare favorably with those of the PTFE sheet of the reference example.

### (Example 7)

In Example 7, an adhesive tape was prepared by using, as a substrate sheet, a sheet that was the same as the PTFE sheet prepared in Example 2 and had a different thickness. First, a band-shaped PTFE sheet was prepared in a similar manner to that of Example 2, except that the thickness was adjusted to 50 µm by adjusting the cutting thickness. Next, one of surfaces of the prepared PTFE sheet was subjected to a sodium treatment for improving the joining properties with an adhesive layer. The sodium treatment refers to a treatment on a surface of a substrate by immersing the substrate in a treatment solution that is a complex salt obtained by dispersing metallic sodium in an aromatic solvent. The treatment solution used was a commercially-available metallic sodium treatment solution. Next, while continuously supplying a PTFE sheet, application and drying of an adhesive composition on a sodium-treated surface of the sheet thus to obtain an adhesive tape. The adhesive composition used was a coating liquid (having a concentration of 40 weight%) obtained by adding 1.8 parts by weight of a xylene solution of benzoyl peroxide (NYPER BMT-K40 manufactured by NOF CORPORATION) per 100 parts by weight of a silicone adhesive (SH-4280PSA manufactured by Dow Corning Toray Co., Ltd.) and then diluting the silicone adhesive with toluene. The application of the adhesive composition was performed with a roll coater. The thickness of the applied adhesive composition was adjusted such that the thickness of the adhesive layer after the drying was 30 µm. The adhesive composition was dried at a temperature of 80°C for 1 minute and then cured at a temperature of 200°C for 1 minute thus to obtain the adhesive tape. The obtained adhesive tape (having a thickness of 80 µm) was slit to have a width of 25 mm, and then wound around a paper core (having an outer diameter of 75 mm). The properties of the adhesive tape of Example 7 are shown in Table 2 below.

### (Example 8)

In Example 8, an adhesive tape (having a thickness of 80 µm and a width of 25 mm) was obtained in a similar manner to that of Example 7, except that an acrylic adhesive was used instead of a silicone adhesive and that the drying conditions after applying the adhesive composition were set to a temperature of 100°C for 3 minutes. The adhesive composition used was a coating liquid obtained as follows: to a mixed solution of 100 parts by weight of 2-ethylhexyl acrylate (2-EHA) and 5 parts by weight of acrylic acid (AA), 0.1 parts by weight of 2,2'-azobisisobutyronitrile (AIBN) as a polymerization initiator and 100 parts by weight of toluene as a polymerization solvent were added; next, N₂ substitution was performed for 2 hours, and then polymerization was allowed to proceed at 60°C for 6 hours thus to obtain an acrylic copolymer; and next, 1 part by weight of an isocyanate crosslinking agent (Coronate-L manufactured by Nippon Polyurethane Industry Co., Ltd.) was added per 100 parts by weight of the obtained acrylic copolymer, and then the resulting mixture was diluted with toluene thus to obtain a coating liquid (having a concentration of 40 weight%). The properties of the adhesive tape of Example 8 are shown in Table 2 below.

### (Comparative Example 3)

In Comparative Example 3, an adhesive tape (having a thickness of 80 µm and a width of 25 mm) was obtained in a similar manner to that of Example 7, except that a substrate used was a sheet (having a thickness of 50 µm) that was the same as the PTFE sheet prepared in Comparative Example 2 and had a different thickness.

**[Table 2]**

| | | Example 7 | Example 8 | Comparative Example 3 |
|---|---|---|---|---|
| Substrate sheet | PTFE addition amount (part by weight) | 100 | 100 | Unmeasured |
| | Filler type | Composite oxide black filler | Composite oxide black filler | Carbon black |
| | Filler addition amount (part by weight) | 3 | 3 | 3 |
| Adhesive layer | | Silicone | Acrylic | Silicone |
| I Blackness (L^{*} value) | | 22 | 22 | 20 |
| Adhesive force (N/25 mm) | | 6.9 | 2.5 | 6.9 |
| Unwinding force (N/25 mm) | | 5.0 | 1.0 | 5.0 |
| BDV (kV/100 µm) | | 5.7 | 5.7 | 1.7 |
| Surface resistivity (Ω/sq) | | Over 1×10¹⁴ | Over 1×10¹⁴ | 2×10⁴ |

As shown in Table 2, the adhesive tapes of the examples achieved blackening and adhesive tape properties that are equivalent to those of the adhesive tapes of the comparative example. Also, the adhesive tapes of the examples achieved higher electrical properties than those of the adhesive tapes of the comparative example, and in particular achieved a larger surface resistivity than that of the adhesive tapes of the comparative example by 10 orders of magnitude or more.

### INDUSTRIAL APPLICABILITY

The fluororesin sheet and the adhesive tape of the present invention can be widely used in various applications.

## Claims

1. A fluororesin sheet mainly comprising a fluororesin, having a blackness of 30 or less as expressed in terms of L^{*} value in an L^{*}a^{*}b^{*} color system, and having a surface resistivity of 1 × 10¹⁰ Ω/sq or more.

2. The fluororesin sheet according to claim 1, comprising a composite oxide black filler.

3. A fluororesin sheet mainly comprising a fluororesin, and comprising a composite oxide black filler.

4. The fluororesin sheet according to claim 2 or 3, wherein
the black filler includes a composite oxide of copper, chromium, and manganese.

5. The fluororesin sheet according to any one of claims 2 to 4, wherein
a content of the black filler in the fluororesin sheet is 1 part by weight or more and 20 parts by weight or less per 100 parts by weight of the fluororesin.

6. The fluororesin sheet according to any one of claims 1 to 5, having a thickness of 1000 µm or less.

7. The fluororesin sheet according to any one of claims 1 to 6, having a relative permittivity of less than 4.0 at a frequency of 10 GHz.

8. The fluororesin sheet according to any one of claims 1 to 7, wherein
the fluororesin is polytetrafluoroethylene.

9. An adhesive tape comprising:
a substrate sheet; and
an adhesive layer provided on one of surfaces of the substrate sheet, wherein
the substrate sheet is the fluororesin sheet according to any one of claims 1 to 8.

10. The adhesive tape according to claim 9, wherein
an adhesive constituting the adhesive layer is a silicone adhesive or an acrylic adhesive.
